# EUROPEAN PATENT SPECIFICATION

(11) **EP 3 737 069 B1**
(45) Date of publication and mention of the grant of the patent: **17.07.2024**
(21) Application number: 19735978.9
(22) Date of filing: 02.01.2019
(51) Int. Cl.: H04L 67/148, H04W 8/12, H04W 8/20, H04W 48/18

(54) **IMPLEMENTATION METHOD AND DEVICE FOR CONTROL PLANE RESOURCE MIGRATION, AND NETWORK FUNCTION ENTITY**
IMPLEMENTIERUNGSVERFAHREN UND VORRICHTUNG ZUR RESSOURCENMIGRATION AUF STEUEREBENE UND NETZWERKFUNKTIONSEINHEIT
PROCÉDÉ ET DISPOSITIF DE MISE EN OEUVRE POUR UNE MIGRATION DE RESSOURCES DE PLAN DE COMMANDE, ET ENTITÉ DE FONCTION DE RÉSEAU

(30) Priority: 03.01.2018 CN 201810005264
(43) Date of publication of application: 11.11.2020
(73) Proprietor: ZTE Corporation, Shenzhen, Guangdong 518057 (CN)
(72) Inventor: TANG, Weijie, Shenzhen, Guangdong 518057 (CN); MA, Xin, Shenzhen, Guangdong 518057 (CN); LI, Zhijun, Shenzhen, Guangdong 518057 (CN); DING, Xuexin, Shenzhen, Guangdong 518057 (CN)
(74) Representative: Ricker, Mathias
(86) International application number: PCT/CN2019/070097
(87) International publication number: WO 2019/134648

(56) References cited:
- WO-A1-2011/150564
- CN-A- 101 500 271
- CN-A- 105 025 541
- INTEL: "23.502: Stickiness control of UE-specific RAN-CN association on N2", vol. SA WG2, no. Busan, Korea; 20170327 - 20170331, 26 March 2017 (2017-03-26), XP051247690, Retrieved from the Internet <URL:http://www.3gpp.org/ftp/Meetings_3GPP_SYNC/SA2/Docs/> [retrieved on 20170326]
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 22 September 2017 (2017-09-22), pages 1 - 165, XP051337116
- ANONYMOUS: "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 22 December 2017 (2017-12-22), pages 1 - 181, XP051392101
- NOKIA ET AL: "Clarification on PCF deployment", vol. SA WG2, no. Hangzhou, China; 20170515 - 20170519, 9 May 2017 (2017-05-09), XP051268704, Retrieved from the Internet <URL:http://www.3gpp.org/ftp/tsg_sa/WG2_Arch/TSGS2_121_Hangzhou/Docs/> [retrieved on 20170509]
- HUAWEI ET AL: "TS 23.501: AMF Group and AMF reselection", vol. SA WG2, no. Hangzhou, China; 20170515 - 20170519, 14 May 2017 (2017-05-14), XP051281642, Retrieved from the Internet <URL:http://www.3gpp.org/ftp/Meetings_3GPP_SYNC/SA2/Docs/> [retrieved on 20170514]

## Description

### TECHNICAL FIELD

The present application relates to the field of mobile communications, in particular to an implementation method for control plane resource migration, and a network function entity.

### BACKGROUND

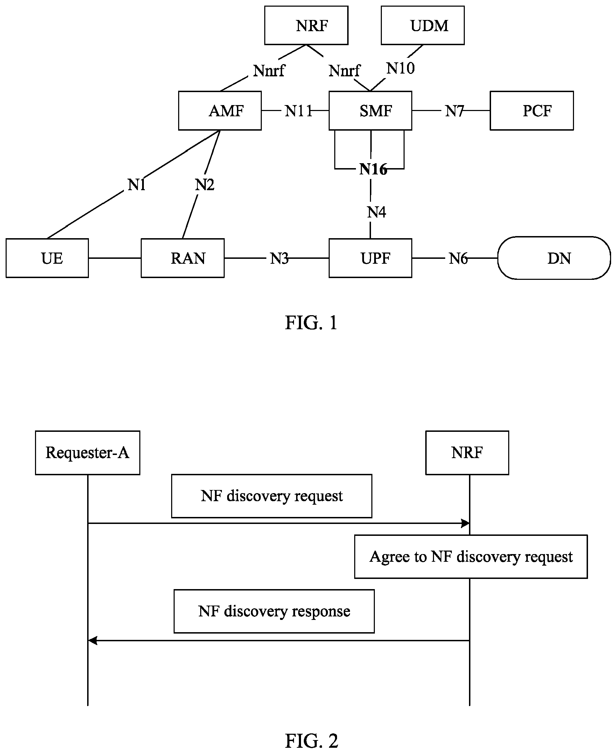

FIG. 1 is a schematic diagram of an overall architecture of a fifth generation (5G) communication system. As shown in FIG. 1, the 5G architecture mainly includes: an access management function (AMF), a session management function (SMF), a user plane function (UPF), a unified data management (UDM), a policy control function (PCF), a network function repository function (NRF).

User plane connection is from a user equipment (UE) to a radio access network (RAN) to a UPF, control plane connection is from the UE to the RAN to the AMF to the SMF, the SMF is selected by the AMF, the control plane and a media plane are separate, and the UPF is selected and managed by SMF.

FIG. 2 is a flowchart of a network function (NF) entity discovery process. An NF server registers to the NRF. When an NF discoverer needs other NF services, the NF discoverer initiates a discovery request to the NRF, where the discovery request carries a position, slice, and other service parameters. The NRF selects a qualified NF according to carried parameters, information subscribed by the UDM, the current policy and load, and other related information, and returns a response message to the discoverer. The discoverer initiates a related service process to the selected NF.

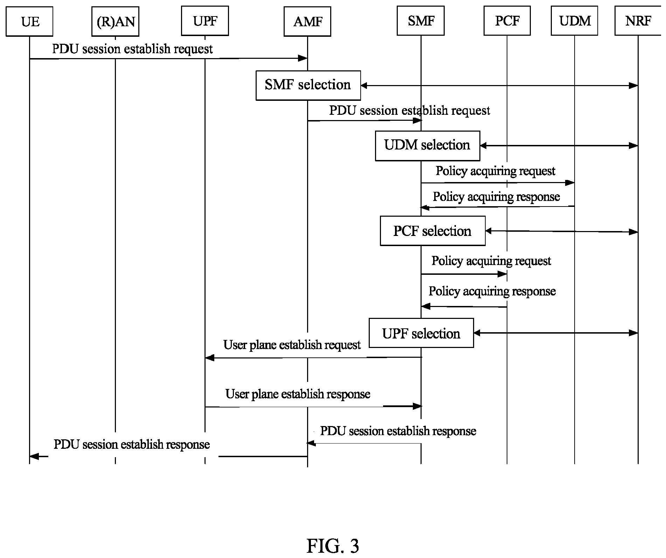

FIG. 3 is a flowchart of establishing a protocol data unit (PDU) session initiated by the UE. In the process of establishing the PDU session, the AMF selects the SMF, and then initiates a session establishment to the selected SMF; the SMF selects the UDM, and acquires user subscription information from the selected UDM, the SMF selects the PCF, and initiates a request for acquiring user policy control information to the selected PCF. The SMF selects the UPF, initiates a session establishment request to the UPF, and establishes a user plane channel.

For the selection of the SMF by the AMF, the selection of the UDM by the SMF, and the selection of the PCF by the SMF, there are two selection manners: selection through local configuration and selection through NRF discovery. Use scenarios of selection through local configuration are relatively limited. For the selection through applying to the NRF for discovery request, reference can be made to the description in FIG. 2.

The above NF selections are all in the session establishment process. However, for the NF that has established the session connection, user control plane resources cannot be migrated.

Further relevant technologies are also known from INTEL: "23.502: Stickiness control of UE-specific RAN-CN association on N2", 3GPP DRAFT; S2-171955_23502_STICKINESS_V2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Busan, Korea; 20170327 - 20170331 26 March 2017 (2017-03-26), XP051247690; "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. V1.2.0, 22 September 2017 (2017-09-22), pages 1-165, XP051337116; ANONYMOUS: "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. V15.0.0, 22 December 2017 (2017-12-22), pages 1-181, XP051392101; and NOKIAET AL: "Clarification on PCF deployment", 3GPP DRAFT; S2-173248-CLARIFICATION ON PCF DEPLOYMENTR1, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, vol. SA WG2, no. Hangzhou, China; 20170515 - 20170519 9 May 2017 (2017-05-09), XP051268704.

### SUMMARY

The invention is defined by a method according to claim 1, a first network function entity according to claim 11 and a computer-readable storage medium according to claim 13. Further embodiments are defined by the dependent claims.

### BRIEF DESCRIPTION OF DRAWINGS

The accompanying drawings are provided for a further understanding of the technical solutions of the present application, and constitute a part of the description. The drawings and the embodiments of the present application are used to explain the technical solutions of the present application, and not intended to limit the technical solutions of the present application.
FIG. 1 is a schematic diagram of an overall architecture of a fifth generation (5G) communication system;
FIG. 2 is a flowchart of the NF discovery;
FIG. 3 is a flowchart of a request process for establishing a PDU session initiated by a user equipment (UE);
FIG. 4 is a flowchart of an implementation method for control plane resource migration according to an embodiment of the present application;
FIG. 5 is a flowchart of an implementation method for control plane resource migration (applied to a first NF) according to an embodiment of the present application;
FIG. 6 is a flowchart of an implementation method for control plane resource migration (applied to a second NF) according to an embodiment of the present application;
FIGS. 7 to 14 are flowcharts of an implementation method for control plane resource migration according to application examples of the present application;
FIG. 15 is a schematic diagram of an implementation device for control plane resource migration (applied to a first NF) according to an embodiment of the present application; and
FIG. 16 is a schematic diagram of an implementation device for control plane resource migration (applied to a second NF) according to an embodiment of the present application.

### DETAILED DESCRIPTION

Embodiments of the present application will be described below in detail with reference to the drawings. It is to be noted that if not in collision, the embodiments and features therein in the present application may be combined with each other.

The steps shown in the flowcharts of the drawings may be performed by a computer system such as a group of computers capable of executing instructions. Although logical sequences are shown in the flowcharts, the shown or described steps may be performed in sequences different from those described herein in some cases.

Embodiments of the present application in which the identifier information of the user to be migrated is identifier information of a UE set, and the identifier information of the UE set is represented by one of: a group identifier, an IMSI segment, and an SMF identifier is not based on the present invention and exists only for illustrative purposes.

For the NF that has established a PDU session connection, user control plane resources migration is needed, when the NF is overloaded (the capacity and resource utilization rate are too high) due to network reason or own reason, or when a certain NF fails (for example, a network failure and a failure of the NF itself), or in the case where operations of the maintenance staff are needed, such as operation and maintenance upgrading, fault isolation, manual capacity expansion and shrinkage, and the like, or in other cases. With ensuring service continuity, the embodiments of the present application provide an implementation method for control plane resource migration to implement dynamic migration of user control plane resources.

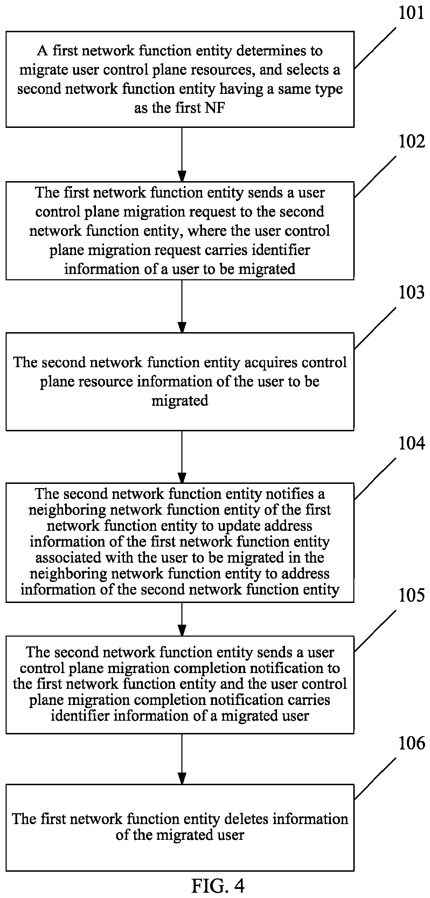

As shown in FIG. 4, the implementation method for control plane resource migration in the embodiment of the present application includes steps 101 to 106.

In step 101, a first network function entity (NF) determines to migrate user control plane resources, and selects a second NF having a same type as the first NF.

The first NF and the second NF are NFs related to a control plane, which may be an SMF, an AMF, UDM or a PCF.

The first NF may be referred to as a source NF, and the second NF may be referred to as a target NF.

The determination of the user control plane resources by the first NF may include: the first NF determines to migrate all or part of the user control plane resources according to load information of the first NF itself; or the first NF receives a migration instruction from a network manager and determines to migrate all or part of the user control plane resources.

The first NF may select the second NF having the same type as the first NF through the NRF, or the first NF locally selects the second NF.

The step of selecting the second NF through the NRF may include that the first NF sends a request for discovering the second NF to the NRF, and the first NF receives a response from the NRF, where the response carries address information of the second NF selected by the NRF.

The step in which the first NF locally selects the second NF may include: selecting the second NF through information such as weight and priority, position coverage area information and NF slice information configured locally.

The slice information is information of a network slice, and may include network slice selection assistance information (NSSAI) and single network slice selection assistance information (S-NSSAI).

In step 102, the first NF sends a user control plane migration request to the second NF, where the user control plane migration request carries identifier information of a user to be migrated.

The user to be migrated may be represented in a form of a UE set, and the identifier information of the user to be migrated may be identifier information of the UE set, such as being represented by one of: a group ID, an international mobile subscriber identification number (IMSI) segment, or a SMF ID. If the SMF ID is used as the identifier information of the user to be migrated, it means that all users belonging to this SMF need to be handed over.

In an embodiment, the user control plane migration request further carries the address information of the first NF. The address information of the first NF is represented by one of: a fully qualified domain name (FQDN), a uniform resource locator (URL), or an Internet protocol (IP) address.

When the address information of the NF is identified by the FQDN or the URL, a correspondence table of the FQDN/URL and an IP address may be set. When the IP address of the NF is changed, such as switching from the first NF to the second NF, the corresponding IP address is also switched from the IP address of the first NF to the IP address of the second NF, the FQDN/URL may be not changed with only changing the IP address in the correspondence table of the FQDN/URL and the IP address.

In step 103, the second NF acquires control plane resource information of the user to be migrated.

In an embodiment, this step may include that: the second NF sends a user information acquisition request to a structured data storage network (SDSF), where the user information acquisition request carries the identifier information of the user to be migrated; and the second NF receives a user information acquisition response from the SDSF, where the user information acquisition response carries control plane resource information of the user to be migrated.

Different NFs need different control plane resource information of the user to be migrated. The control plane resource information of the user to be migrated may include, but is not limited to, user context information. For example, in an embodiment, the control plane resource information of the user to be migrated includes: the user context information and PDU session information. In another embodiment, the control plane resource information of the user to be migrated includes: the user context information, the PDU session information, and quality of service and flow control information.

The user context information may include: a user identifier, an identifier of a UE set to which it belongs, user position information, and user subscription information. The PDU session information may include: a PDU session identifier, an access mode (sscMode), a UE address, a data network access identifier (DNAI), neighboring node information, information of a slice to which it belongs, and a data network name (DNN). The Qos and flow control information may include: Qos, QoS flow identifier (QFI), and charging related information.

In step 104, the second NF notifies a neighboring NF of the first NF to update address information of the first NF associated with the user to be migrated in the neighboring NF to address information of the second NF.

The neighboring NF refers to an NF adjacent to the first NF and having a communication connection relationship with the first NF. For example, if the first NF is an SMF, the neighboring NF may include: an AMF, a PCF, a UDM, an UPF.

The second NF may obtain address information of the neighboring NF according to, but is not limited to, the control plane resource information (for example, the user context information), thereby notifying the neighboring NF.

As described above, if the IP address is used as the address information, the IP address of the first NF is updated to the IP address of the second NF. That is, the neighboring NF of the first NF is notified to change replacing address information of the first NF associated with the user to be migrated in the neighboring NF with address information of the second NF.

If the FQDN or URL is used as the address information, the IP address corresponding to the FQDN or the URL of the first NF in the correspondence table of the FQDN/URL and IP address is updated to the IP address of the second NF, i.e., the neighboring NF of the first NF is notified to update the IP address corresponding to the FQDN or the URL of the first NF associated with the user to be migrated to the IP address of the second NF. In this implementation mode, the correspondence table of the FQDN/URL and IP address is established. If the IP address needs to be updated, only the correspondence table needs to be updated, which is more convenient in practical application.

In addition, before the migration is completed, the service initiating of the neighboring NF of the first NF may have two schemes: the neighboring NF discards a service message during the migration and waits for retransmission, the subsequent retransmission message is forwarded to the second NF, the service message is cached, and after the migration is completed, the message is forwarded to the second NF to continue the service process.

After the step 104, the method further includes steps 105 and 106.

In the step 105, the second NF sends a user control plane migration completion notification to the first NF and the user control plane migration completion notification carries identifier information of a migrated user.

When the user control plane migration is completed, the user to be migrated becomes the migrated user.

In step 106, the first NF deletes information of the migrated user.

Information of the migrated user may include control plane resource information of the migrated user.

In this step, the first NF deletes locally stored information of the migrated user, releases local resources, which can improve the overload situation, implement the load balance of the control plane entity and optimize the control plane network deployment.

In the embodiment of the present application, the NF itself triggers lossless migration of the user control plane resources. For the NF that has established the PDU session connection, if the overload occurs, load of the control plane entity may be balanced by using the above method, resource utilization of the network may be improved and network resources are optimized in real time. In addition, if maintenance upgrading, fault isolation, manual capacity expansion and shrinkage occur, the embodiment may also ensure continuity and reliability of the user service, and user experience is improved.

The first NF and the second NF are respectively described below.

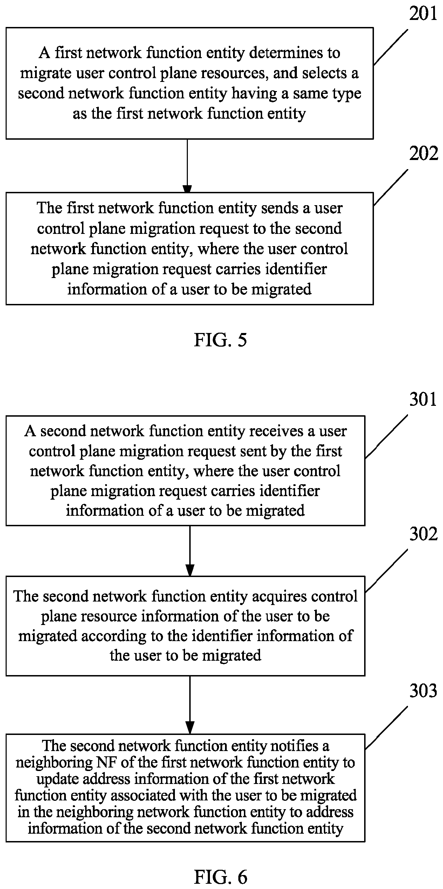

For the first NF, as shown in FIG. 5, the embodiment of the present application provides an implementation method for control plane resource migration, including the steps 201 and 202.

In step 201, a first network function entity (NF) determines to migrate user control plane resources, and selects a second NF having a same type as the first NF.

The first NF and the second NF are NFs related to a control plane, which may be an SMF, an AMF, a UDM or a PCF.

The first NF may determine to migrate the user control plane resources in the following step: the first NF determines to migrate all or part of the user control plane resources according to load information of the first NF itself; or the first NF receives a migration instruction and determines to migrate all or part of the user control plane resources.

The first NF may select the second NF having the same type as the first NF in the following step, the first NF selects the second NF through the NRF, or the first NF locally selects the second NF.

The step of selecting the second NF through the NRF may include that the first NF sends a request for discovering the second NF to the NRF and receives a response from the NRF, where the response carries address information of the second NF selected by the NRF.

The first NF sends a request for discovering the second NF to the NRF, where the request carries load information of the first NF, and may carry slice information, and other information related to selection of the second NF.

The NRF selects a second SMF according to information that includes the load information of the first NF and that may also include the slice information, and weight information, load information, and coverage position area of each candidate second NF, and the IP address of the second NF is carried in a response message sent to the first NF.

In step 202, the first NF sends a user control plane migration request to the second NF, where the user control plane migration request carries identifier information of the user to be migrated.

In an embodiment, the identifier information of the user to be migrated is identifier information of a UE set, and the identifier information of the UE set is represented by one of: a group identifier, an IMSI segment, and an SMF identifier.

In an embodiment, the user control plane migration request further carries the address information of the first NF. The address information of the first NF is represented by one of: the FQDN, the URL, or the IP address.

In an embodiment, after the step 202, the method may further include that: the first NF receives a user control plane migration completion notification sent by the second NF, where the user control plane migration completion notification carries identifier information of the migrated user, and the first NF deletes information of the migrated user.

In the embodiment of the present application, the first NF itself triggers the lossless migration of the user control plane resources, which can optimize the network resources in real time, improve the resource utilization of the network, ensure the reliability of the user service and improve the user experience.

For the second NF, as shown in FIG. 6, the embodiment of the present application provides an implementation method for control plane resource migration, including steps 301 and 303.

In step 301, the second network function entity (NF) receives a user control plane migration request sent by the first NF, where the user control plane migration request carries identifier information of a user to be migrated;
The first NF and the second NF are NFs related to a control plane, which may be an SMF, an AMF, a UDM or a PCF.

In step 302, the second NF acquires control plane resource information of the user to be migrated according to the identifier information of the user to be migrated.

In an embodiment, the method may further include that: the second NF sends a user information acquisition request to the structured data storage network (SDSF), where the user information acquisition request carries the identifier information of the user to be migrated; and the second NF receives a user information acquisition response from the SDSF, where the user information acquisition response carries control plane resource information of the user to be migrated.

The control plane resource information of the user to be migrated may include one of: user context information; the user context information and PDU session information; or the user context information, the PDU session information, and Qos and flow information.

In step 303, the second NF notifies a neighboring NF of the first NF to update address information of the first NF associated with the user to be migrated in the neighboring NF to address information of the second NF.

In an embodiment, this step may include: notifying the neighboring NF of the first NF to update the IP address of the first NF associated with the user to be migrated to the IP address of the second NF, or notifying the neighboring NF of the first NF to update the IP address corresponding to the FQDN or URL of the first NF associated with the user to be migrated to the IP address of the second NF.

In an embodiment, after the step 303, the method further includes that: the second NF sends a user control plane migration completion notification to the first NF and the user control plane migration completion notification carries identifier information of a migrated user.

In the embodiment of the present application, the user control plane resources in the first NF are migrated to the second NF through the second NF, which can optimize the network resources in real time, improve the resource utilization of the network, at the same time, ensure the reliability of the user service and improve the user experience.

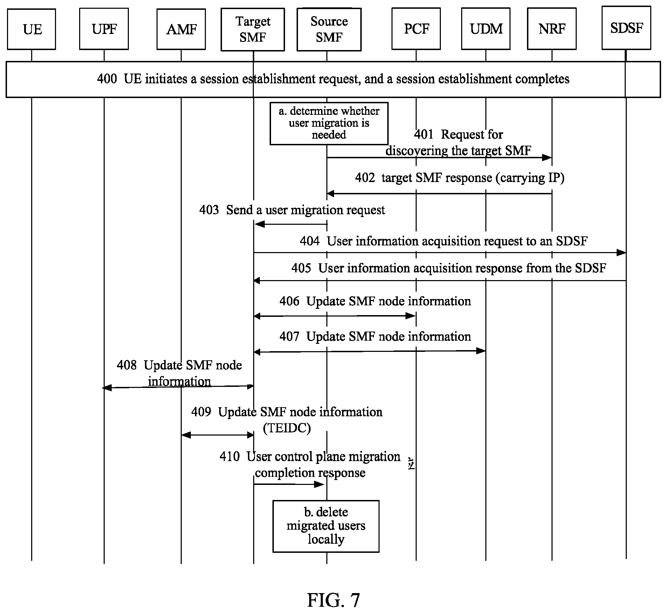

Some application examples are described below for explanation:
As shown in FIG. 7, in this application example, the first NF and the second NF are SMFs, the first NF is used as a source SMF and the second NF is used as a target SMF. When the source SMF finds overload of the source SMF itself or other cases needing user control plane resource migration, the source SMF locally selects the target SMF, or sends a request for discovering the target SMF to the NRF. The NRF selects the target SMF according to information such as position, slice, DNAI and other service parameters and weight, load, coverage position area of each SMF, sends the IP address of the target SMF to the source SMF through a response message. The source SMF selects one or more users to be migrated to the target SMF. After the migration of users that have accessed is completed, the target SMF notifies the neighboring NF of the source SMF, and then the target SMF notifies the source SMF to locally delete the related users, and implements migration of user control plane resources of the source SMF. This example includes steps 400 to 410.

In step 400, the UE initiates a session establishment request. The session establishment is completed, and the SMF is accesses by the user.

In step a, when the source SMF finds that the source SMF itself is overloaded or finds other cases in which user control plane resource migration is required, the source SMF locally selects the target SMF, and then performs the step 403; or the target SMF is selected by the NRF and the source SMF performs steps 401 and 402.

In step 401, the source SMF sends a request for discovering the target SMF to the NRF, where the request carries information such as the load, the slice and the position and other information related to the SMF selection.

In step 402, the NRF selects the target SMF according to the position, the slice, the DNAI and other service parameters, and the weight, the load, and the coverage position area of each SMF, and sends a response message carrying the IP address of the target SMF to the source SMF.

In step 403, the source SMF selects at least one UE set to migrate to the target SMF, and sends the user control plane migration request to the target SMF, where the user control plane migration request carries information such as identifier information of the user to be migrated and address information of the source SMF. The user to be migrated may be a UE set, and the address information of the source SMF may be an FQDN or URL identifier of this node.

In step 404, the target SMF sends a user information acquisition request to the SDSF, which carries identifier information of the UE set to be migrated.

In step 405, the SDSF sends a UE set information response to the target SMF, which carries control plane resource information related to SMF and user, including identifier information, user context information, a PDU session and Qos Flow of the UE set to be migrated.

In step 406, the target SMF notifies the PCF to update SMF node information of the UE set to be migrated, where the notification carries an IP address of the SMF corresponding to the UE set to be migrated, and the PCF updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 407, the target SMF notifies the UDM to update SMF node information of the UE set to be migrated, where the notification carries the IP address of the SMF corresponding to the UE set to be migrated, and the UDM updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 408, the target SMF notifies the UPF to update SMF node information of the UE set to be migrated, where the notification carries an IP address of the SMF corresponding to the UE set to be migrated, and the UPF updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 409, the target SMF notifies the AMF to update SMF node information of part of the UE set to be migrated, where the notification carries the IP address of the SMF corresponding to the UE set to be migrated and tunnel endpoint identifier control (TEIDC) information of the target SMF, and the AMF updates the TEIDC information and address information of the SMF corresponding to the UE set to be migrated. If the address information of the SMF is represented by the IP address, the IP address is directly replaced with the IP address of the target SMF. If the address information of the SMF is represented by the FQDN or the URL, the IP address corresponding to the FQDN/URL of the SMF associated with the UE set to be migrated is updated to the IP address of the target SMF.

In step 410, the target SMF notifies the source SMF of completion of the user control plane migration, where the notification carries identifier information of a migrated UE set.

In step b, the source SMF locally deletes information of a user that has been migrated to the target SMF.

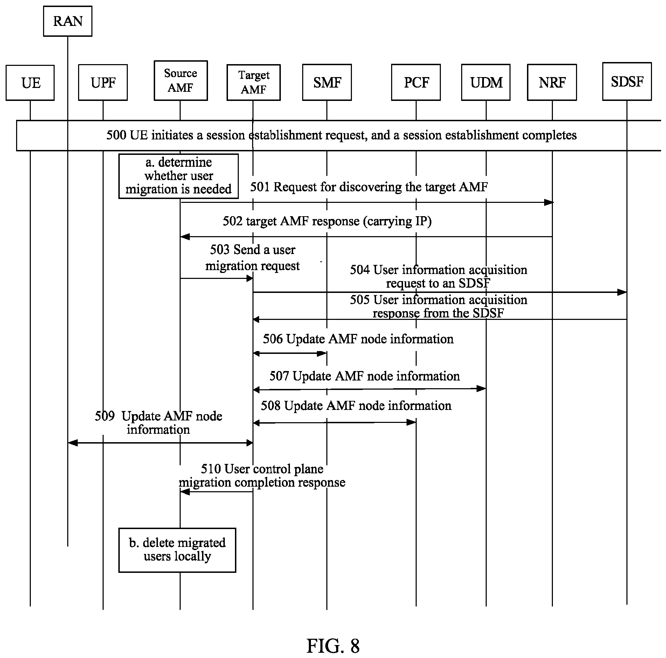

As shown in FIG. 8, in this application example, the first NF and the second NF are AMFs, the first NF serves as a source AMF and the second NF serves as a target AMF. When the source AMF finds that the source AMF itself is overloaded or user control plane resource migration is required, the source AMF locally selects the target AMF, or sends a request for discovering the target AMF to the NRF. The NRF selects the target AMF according to information such as position, slice and other service parameters and weight, load, coverage position area of each AMF, and sends a response message carrying an IP address of the target AMF to the source AMF. The source AMF selects at least one user to migrate to the target AMF. After the migration of the user that has accessed is completed, the target AMF notifies the neighboring NF of the source AMF, and then the target AMF notifies the source AMF to locally delete the related users, and thus migration of user control plane resources of the source AMF is implemented. This example includes steps 500 to 510.

In step 500, the UE initiates a session establishment request. The session establishment is completed, and the AMF accesses to the user.

In step a, when the source AMF finds that the source AMF itself is overloaded or user control plane resource migration is required, the source AMF locally selects the target AMF, and then performs the step 503; or the target AMF is selected by the NRF and steps 501 and 502 are performed.

In step 501, the source AMF sends the request for discovering the target AMF to the NRF, where the request carries the load, the slice and the position and other information related to the AMF selection.

In step 502, the NRF selects the target AMF according to the position, the slice and other service parameters and the weight, the load, and the coverage position area of each AMF, and sends the IP address of the target AMF to the source AMF through the response message.

In step 503, the source AMF selects at least one UE set to migrate to the target AMF, and sends the user control plane migration request to the target AMF, where the request carries information such as identifier information of the user to be migrated and address information of the source AMF. The user to be migrated may be a UE set, and the address information of the source AMF may be the FQDN or URL identifier of this node.

In step 504, the target AMF sends a user information acquisition request to the SDSF, which carries the identifier information of the UE set to be migrated.

In step 505, the SDSF replies a user information acquisition response to the target AMF, which carries the identifier information and user context information of the UE set to be migrated, and may further include user-related control plane resource information of the AMF such as such as the PDU session and Qos Flow.

In step 506, the target AMF notifies the SMF to update AMF node information of part of users, where the notification carries the IP address of the AMF corresponding to the UE set to be migrated, and the SMF updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 507, the target AMF notifies the UDM to update AMF node information of part of the UE set, where the notification carries the IP address of the AMF corresponding to the UE set to be migrated, and the UDM updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 508, the target AMF notifies the PCF to update AMF node information of part of the UE set, where the notification carries the IP address of the AMF corresponding to the UE set to be migrated, and the UDM updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 509, the target AMF notifies the RAN to update AMF node information of part of the UE set, where the notification carries the IP address of the AMF corresponding to the UE set to be migrated and TEIDC information of the target AMF, and the RAN updates the TEIDC information and address information of the AMF corresponding to the UE set to be migrated. If the address information of the AMF is represented by the IP address, the IP address is directly replaced with the IP address of the target AMF. If the address information of the AMF is represented by the FQDN or the URL, the IP address corresponding to the FQDN/URL of the AMF associated with the UE set to be migrated is updated to the IP address of the target AMF.

In step 510, the target AMF notifies the source AMF of the completion of the user control plane migration, where the notification carries identifier information of the UE set having been migrated.

In step b, the source AMF locally deletes information of a user that has been migrated to the target AMF.

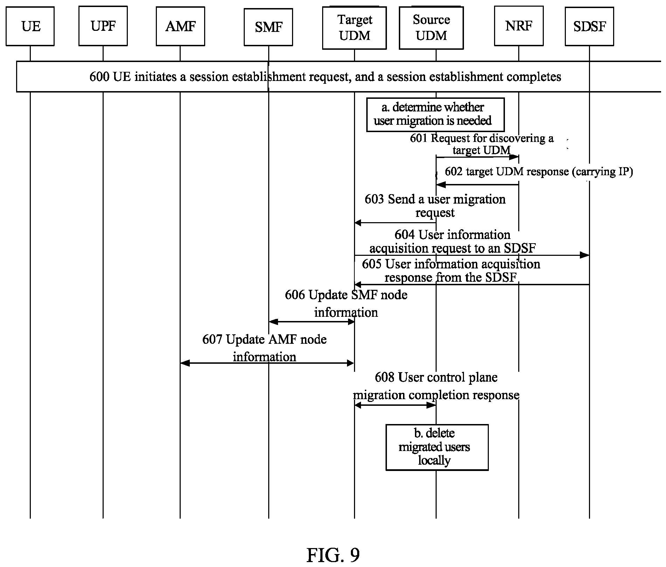

As shown in FIG. 9, in this application example, the first NF and the second NF are UDMs, the first NF is used as the source UDM and the second NF is used as the target UDM. When the source UDM finds that the source UDM itself is overloaded or user control plane resource migration is required, the source UDM locally selects the target UDM or sends a request for discovering the target UDM to the NRF. The NRF selects the target UDM according to information such as position, slice and other service parameters and weight, load, coverage position area of each UDM, and sends the IP address of the target UDM to the source UDM via a response message. The source UDM selects at least one user to migrate to the target UDM. After the migration of the user that has accessed is completed, the target UDM notifies the neighboring NF of the source UDM, and then the target UDM notifies the source UDM to locally delete the related users, and thus migration of user control plane resources of the source UDM is implemented. This example includes steps 600 to 608.

In step 600, the UE initiates a session establishment request. The session establishment is completed, and the UDM accesses to the user.

In step a, when the UDM finds that the UDM itself is overloaded or user control plane resource migration is required, the source UDM locally selects the target UDM, and then performs the step 603; or steps 601 and 602 are performed.

In step 601, the source UDM sends the request for discovering the target UDM to the NRF, where the request carries information such as load information, slice information, position information, and other information related to UDM selection.

In step 602, the NRF selects the target UDM according to the the position information, the slice information and other service parameters, and the weight, the load, and the coverage position area of each UDM, and sends the IP address of the target UDM to the source UDM through the response message.

In step 603, the source UDM selects at least one UE set to migrate to the target UDM, and sends the user control plane migration request to the target UDM, where the request carries information such as identifier information of the user to be migrated and address information of the source UDM. The user to be migrated may be a UE set, and the address information of the source UDM may be the FQDN or URL identifier of this node.

In step 604, the target UDM sends a user information acquisition request to the SDSF, which carries the identifier information of the UE set to be migrated.

In step 605, the SDSF sends a user information response to the target UDM, which carries user context information, a PDU session, Qos Flow information, identifier information of the UE set to be migrated, and other user-related control plane resource information of the UDM.

In step 606, the target UDM notifies the SMF to update UDM node information of the UE set to be migrated, where the notification carries an IP address of the UDM corresponding to the UE set to be migrated, and the SMF updates address information of the UDM corresponding to the UE set to be migrated. If the address information of the UDM is represented by the IP address, the IP address is directly replaced with the IP address of the target UDM. If the address information of the UDM is represented by the FQDN or the URL, an IP address corresponding to the FQDN/URL of the UDM associated with the UE set to be migrated is updated to the IP address of the target UDM.

In step 607, the target UDM notifies the AMF to update UDM node information of the UE set to be migrated, where the notification carries the IP address of the UDM corresponding to the UE set to be migrated, and the AMF updates address information of the UDM corresponding to the UE set to be migrated. If the address information of the UDM is represented by the IP address, the IP address is directly replaced with the IP address of the target UDM. If the address information of the UDM is represented by the FQDN or the URL, an IP address corresponding to the FQDN/URL of the UDM associated with the UE set to be migrated is updated to the IP address of the target UDM.

In step 608, the target UDM notifies the source UDM of the completion of the user control plane migration, where the notificationcarries information of a UE set having been migrated.

In step b, the source UDM locally deletes information of the user that has been migrated to the target UDM.

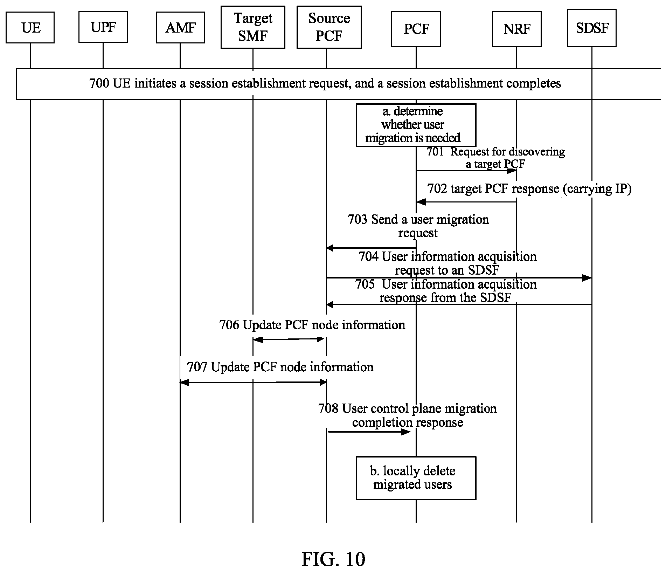

As shown in FIG. 10, in this application example, the first NF and the second NF are PCFs, the first NF is used as a source PCF and the second NF is used as a target PCF. When the source PCF finds that the source PCF itself is overloaded or user control plane resource migration is required, the source PCF locally selects the target PCF. Alternatively, the source PCF sends a request for discovering the target PCF to the NRF, and the NRF selects the target PCF according to position information, slice information and other service parameters and weight, load, coverage position area of each PCF, and sends an IP address of the target PCF to the source PCF in a response message. The source PCF selects at least one user to migrate to the target PCF. After the migration of the accessed users is completed, the target PCF notifies the neighboring NF of the source PCF, and then the target PCF notifies the source PCF to locally delete the related users, and thus the migration of user control plane resources of the source PCF is implemented. This example includes steps 700 to 708.

In step 700, the UE initiates a session establishment request. The session establishment is completed, and the PCF accesses to the user.

In step a, when the PCF finds that the PCF itself is overloaded or user control plane resource migration is required, the source PCF locally selects the target PCF, and then performs the step 703. Alternatively, steps 701 and 702 are performed.

In step 701, the request for discovering the target NRF is sent to the NRF, which carries the load information, the slice information, the position information, and other information related to the PCF selection.

In step 702, the NRF selects the target PCF according to the position information, the slice information and other service parameters, and the weight, the load, and the coverage position area of each PCF, and sends the IP address of the target PCF to the source PCF through the response message.

In step 703, the source PCF selects at least one UE set to migrate to the target PCF, and sends the user control plane migration request to the target PCF, which carries information such as identifier information of the user to be migrated and address information of the source PCF. The user to be migrated may be a UE set, and the address information of the source PCF may be the FQDN or URL identifier of this node.

In step 704, the target PCF sends a user information acquisition request to the SDSF, which carries identifier information of the UE set.

In step 705, the SDSF responds to a target PCF with a UE set information response, which carries user context information, a PDU session, Qos Flow information, identifier information of the UE set to be migrated, and other control plane resource information related to users and PCF.

In step 706, the target PCF notifies the SMF to update PCF node information of the UE set to be migrated, where the notification carries an IP address of the PCF corresponding to the UE set to be migrated, and the SMF updates address information of the PCF corresponding to the UE set to be migrated. If the address information of the PCF is represented by the IP address, the IP address is directly replaced with the IP address of the target PCF. If the address information of the PCF is represented by the FQDN or the URL, an IP address corresponding to the FQDN/URL of the PCF associated with the UE set to be migrated is updated to the IP address of the target PCF.

In step 707, the target PCF notifies the AMF to update PCF node information of the UE set to be migrated, where the notification carries the IP address of the PCF corresponding to the UE set to be migrated, and the AMF updates address information of the PCF corresponding to the UE set to be migrated. If the address information of the PCF is represented by the IP address, the IP address is directly replaced with the IP address of the target PCF. If the address information of the PCF is represented by the FQDN or the URL, an IP address corresponding to the FQDN/URL of the PCF associated with the UE set to be migrated is updated to the IP address of the target PCF.

In step 708, the target PCF notifies the source PCF of the completion of the UE set control plane migration, where the notification carries information of a UE set having been migrated.

In step b, the source PCF locally deletes information of the user that has been migrated to the target PCF.

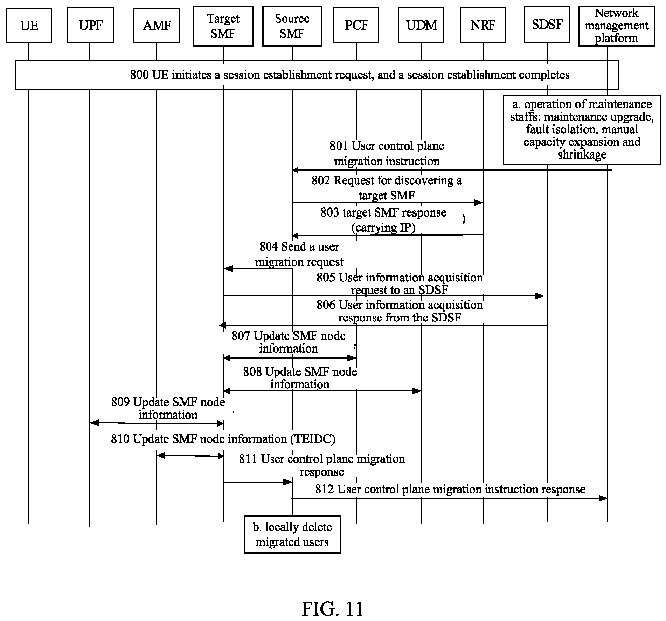

As shown in FIG. 11, in this application example, the first NF and the second NF are SMFs, the first NF is used as a source SMF and the second NF is used as a target SMF. When a maintenance staff needs to perform operations, such as maintenance upgrade, fault isolation, manual capacity expansion and shrinkage, the maintenance staff sends an instruction to the source SMF, the source SMF locally selects the target SMF. Alternatively, the target SMF is discovered through the NRF, the NRF selects the target SMF according to information such as position, slice, DNAI and other service parameters and weight, load, coverage position area of each SMF. The target SMF migrates users accessed to the source SMF to the target SMF, After the migration of the user is completed, the target SMF notifies neighboring function entities, notifies the source SMF of the migrated UE set to locally delete the related users, and thus migration of user control plane resources of the source SMF is implemented. This example includes steps 800 to 812.

In step 800, the UE initiates a session establishment request. The session establishment is completed, and the SMF accesses to the user.

In step a, a maintenance staff needs to perform operations, such as maintenance upgrade, fault isolation, manual capacity expansion and shrinkage.

In step 801, a network management platform sends a user control plane migration instruction to the source SMF, the source SMF locally selects the target SMF, and then the step 804 is performed; or steps 802 and 803 are performed and the target SMF is selected by the NRF.

In step 802, the source SMF requests the NRF to discover the target SMF, where the request carries information such as slice, position, and SMF load.

In step 803, the NRF selects the target SMF according to the information such as slice, position, and SMF load, and responds to the source SMF, where the response carries the IP of the target SMF.

In step 804, the source SMF sends the user migration request to the target SMF, where the request carries information such as identifier information of the user to be migrated and address information of the source SMF. The user to be migrated may be a UE set, and the address information of the source SMF may be an FQDN or URL identifier of this node.

In step 805, the target SMF sends a user information acquisition request to the SDSF, which carries identifier information of the UE set to be migrated

In step 806, the SDSF replies with a target SMF user information response, which carries user context information, a PDU session, Qos Flow, identifier information of the UE set to be migrated, and information related to SMF and users.

In step 807, the target SMF notifies the PCF to update SMF node information of the UE set to be migrated, where the notification carries an IP address of the SMF corresponding to the UE set to be migrated, and the PCF updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 808, the target SMF notifies the UDM to update SMF node information of the UE set to be migrated, where the notification carries the IP address of the SMF corresponding to the UE set to be migrated, and the UDM updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 809, the target SMF notifies the UPF to update SMF node information of the UE set to be migrated, where the notification carries an IP address of the SMF corresponding to the UE set to be migrated, and the UPF updates address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 810, the target SMF notifies the AMF to update SMF node information of the UE set to be migrated, where the notification carries TEIDC information of the target SMF and an IP address of the SMF corresponding to the UE set to be migrated, and the AMF updates the TEIDC information and address information of the SMF corresponding to the UE set to be migrated. If the address information of the SMF is represented by the IP address, the IP address is directly replaced with the IP address of the target SMF. If the address information of the SMF is represented by the FQDN or the URL, an IP address corresponding to the FQDN/URL of the SMF associated with the UE set to be migrated is updated to the IP address of the target SMF.

In step 811, the target SMF replies a user control plane migration response to the source SMF, indicating that the target SMF has established related user information and can operate normally.

In step 812, the source SMF replies the user control plane migration response to the network management platform, and the user control plane migration is completed.

In step b, the source SMF locally deletes information of users that have been migrated to the target SMF.

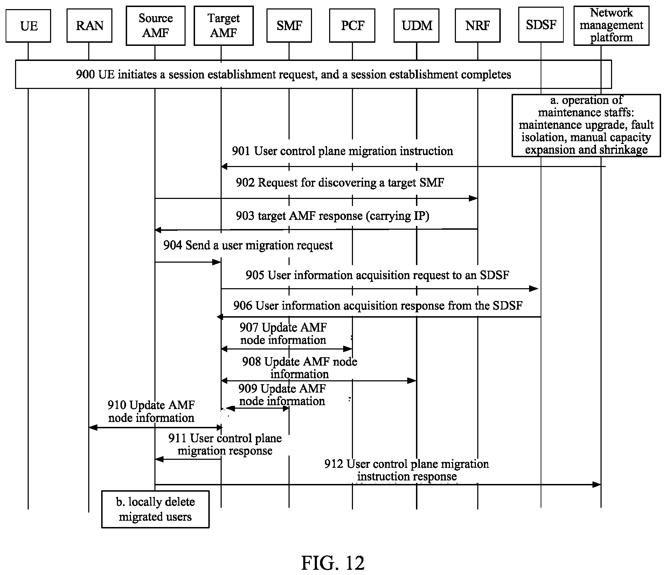

As shown in FIG. 12, in this application example, the first NF and the second NF are AMFs, the first NF is used as a source AMF and the second NF is used as a target AMF. When a maintenance staff needs to perform operations, such as maintenance upgrade, fault isolation, manual capacity expansion and shrinkage, the maintenance staff sends an instruction to the source AMF, the source AMF locally selects the target AMF. Alternatively, the target AMF is selected through the NRF, the NRF selects the target AMF according to information such as position, slice, DNAI and other service parameters and weight, load, coverage position area of each AMF. The target AMF migrates users accessed to the source AMF to the target AMF. After the migration of the user is completed, the target AMF notifies neighboring function entities, notifies the source AMF of the migrated UE set, such that the source AMF locally deletes the related users, and thus migration of user control plane resources of the source AMF is implemented. This example includes steps 900 to 912.

In step 900, the UE initiates a session establishment request. The session establishment is completed, and the AMF accesses to the user.

In step a, a maintenance staff needs to perform operations, such as maintenance upgrade, fault isolation, manual capacity expansion and shrinkage.

In step 901, a network management platform sends a user control plane migration instruction to the source AMF, the source AMF locally selects the target AMF, and then the step 904 is performed; or steps 902 and 903 are performed and the target AMF is selected by the NRF.

In step 902, the request for discovering the target AMF is sent to the NRF, and the request carries information such as the load, the slice and the position and other information related to the AMF selection.

In step 903, the NRF selects the target AMF according to the information such as the position, the slice and other service parameters, and the weight, the load, and the coverage position area of each AMF, and sends the IP address of the target AMF to the source AMF through the response message.

In step 904, the source AMF selects at least one UE set to migrate to the target AMF, and sends the user control plane migration request to the target AMF, which carries information such as identifier information of the user to be migrated and address information of the source AMF. The user to be migrated may be a UE set, and the address information of the source AMF may be the FQDN or URL identifier of this node.

In step 905, the target AMF sends a UE set information acquisition request to the SDSF, which carries the identifier information of the UE set to be migrated

In step 906, the SDSF responds with a target AMF user information response, which carries user context information and identifier information of the UE set to be migrated, a PDU session, Qos Flow, and information related to AMF and users.

In step 907, the target AMF notifies the SMF to update AMF node information of part of users, where the notification carries the IP address of the AMF corresponding to the UE set to be migrated, and the SMF updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 908, the target AMF notifies the UDM to update AMF node information of part of the UE set, where the notification carries the IP address of the AMF corresponding to the UE set to be migrated, and the UDM updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 909, the target AMF notifies the PCF to update AMF node information of part of the UE set, where the notification carries the IP address of the AMF corresponding to the UE set to be migrated, and the UDM updates address information of the AMF corresponding to the UE set to be migrated. If the address information of the AMF is represented by the IP address, the IP address is directly replaced with the IP address of the target AMF. If the address information of the AMF is represented by the FQDN or the URL, an IP address corresponding to the FQDN/URL of the AMF associated with the UE set to be migrated is updated to the IP address of the target AMF.

In step 910, the target AMF notifies the RAN to update AMF node information of part of the UE set, where the notification carries the IP address of the AMF corresponding to the UE set to be migrated and TEIDC information of the target AMF, and the RAN updates the TEIDC information and address information of the AMF corresponding to the UE set to be migrated. If the address information of the AMF is represented by the IP address, the IP address is directly replaced with the IP address of the target AMF. If the address information of the AMF is represented by the FQDN or the URL, the IP address corresponding to the FQDN/URL of the AMF associated with the UE set to be migrated is updated to the IP address of the target AMF.

In step 911, the target AMF replies a user control plane migration response to the source AMF, indicating that the target AMF has established related user information and can operate normally.

In step 912, the source AMF replies the user control plane migration response to the network management platform, and the user control plane migration is completed.

In step b, the source AMF locally deletes information of users that have been migrated to the target AMF.

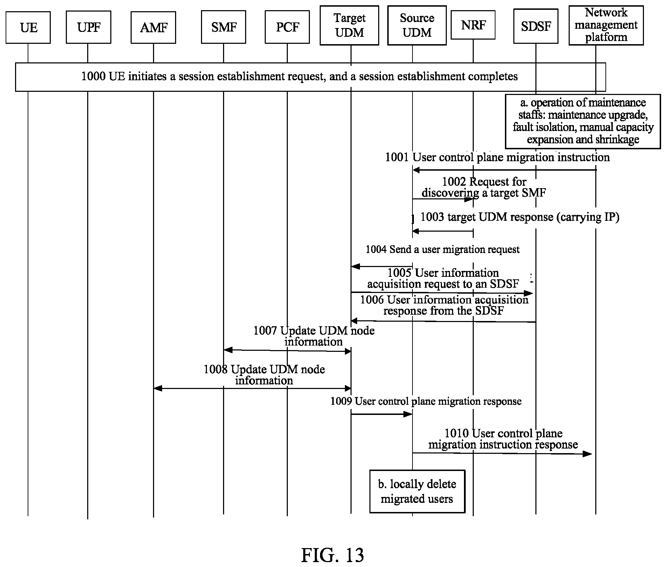

As shown in FIG. 13, in this application example, the first NF and the second NF are UDMs, the first NF is used as source UDM and the second NF is used as target UDM. When a maintenance staff needs to perform operations, such as maintenance upgrade, fault isolation, manual capacity expansion and shrinkage, the maintenance staff sends an instruction to the source UDM, the source UDM locally selects the target UDM. Alternatively, the target UDM is selected through the NRF, the NRF selects the target UDM according to information such as position, slice, DNAI and other service parameters and weight, load, coverage position area of each UDM. The target UDM migrates users accessed to the source UDM to the target UDM. After the migration of the user that has been accessed is completed, the target UDM notifies neighboring function entities, and notifies the source UDM of the migrated UE set, such that the source UDM locally deletes the related users, and thus migration of user control plane resources of the source UDM is implemented. This example includes steps 1000 to 1010.

In step 1000, the UE initiates a session establishment request. The session establishment is completed, and the UDM accesses to the user.

In step a, a maintenance staff needs to perform operations, such as maintenance upgrade, fault isolation, manual capacity expansion and shrinkage.

In step 1001, a network management platform sends a user control plane migration instruction to the source UDM, the source UDM locally selects the target UDM, and then the step 1004 is performed; or steps 1002 and 1003 are performed and the target UDM is selected by the NRF.

In step 1002, the request for discovering the target UDM is sent to the NRF, where the request carries information such as the load, the slice and the position and other information related to the UDM selection.

In step 1003, the NRF selects the target UDM according to the information such as the position, the slice and other service parameters, and the weight, the load, and the coverage position area of each UDM, and sends the IP address of the target UDM to the source UDM through the response message.

In step 1004, the source UDM selects at least one UE set to migrate to the target UDM, and sends the user control plane migration request to the target UDM, which carries information such as identifier information of the user to be migrated and address information of the source UDM. The user to be migrated may be a UE set, and the address information of the source UDM may be the FQDN or URL identifier of this node.

In step 1005, the target UDM sends a request for acquiring UE set information to the SDSF, which carries the identifier information of the UE set to be migrated

In step 1006, the SDSF responds with a target UDM UE set response, which carries identifier information of the UE set to be migrated, user context information, a PDU session, Qos Flow, and information related to UDM and users.

In step 1007, the target UDM notifies the SMF to update UDM node information of the UE set to be migrated, where the notification carries an IP address of the UDM corresponding to the UE set to be migrated, and the SMF updates address information of the UDM corresponding to the UE set to be migrated. If the address information of the UDM is represented by the IP address, the IP address is directly replaced with the IP address of the target UDM. If the address information of the UDM is represented by the FQDN or the URL, an IP address corresponding to the FQDN/URL of the UDM associated with the UE set to be migrated is updated to the IP address of the target UDM.

In step 1008, the target UDM notifies the AMF to update UDM node information of the UE set to be migrated, where the notification carries an IP address of the UDM corresponding to the UE set to be migrated, and the AMF updates address information of the UDM corresponding to the UE set to be migrated. If the address information of the UDM is represented by the IP address, the IP address is directly replaced with the IP address of the target UDM. If the address information of the UDM is represented by the FQDN or the URL, an IP address corresponding to the FQDN/URL of the UDM associated with the UE set to be migrated is updated to the IP address of the target UDM.

In step 1009, the target UDM notifies the source UDM of the completion of the user control plane migration, where the notification carries information of a UE set having been migrated.

In step 1010, the source AMF sends the user control plane migration response to the network management platform, and the user control plane migration is completed.

In step b, the source UDM locally deletes information of users that have been migrated to the target UDM.

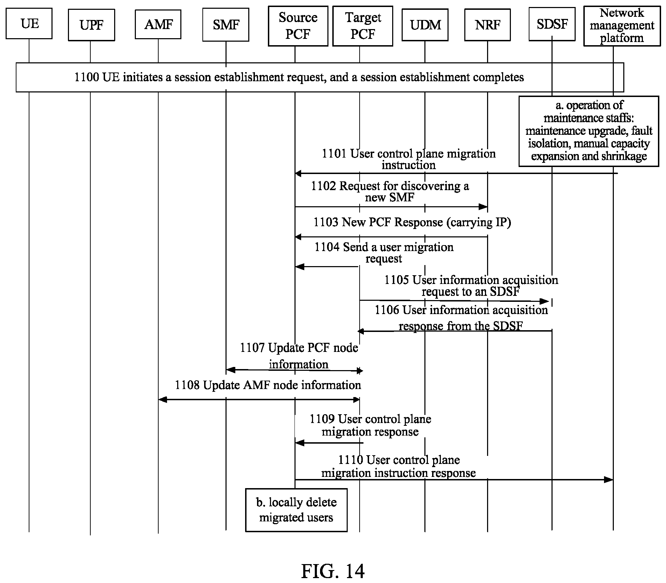

As shown in FIG. 14, in this application example, the first NF and the second NF are PCFs, the first NF is used as a source PCF and the second NF is used as a target PCF. When a maintenance staff needs to perform operations, such as maintenance upgrade, fault isolation, manual capacity expansion and shrinkage, the maintenance staff sends an instruction to the source PCF, the source PCF locally selects the target PCF. Alternatively, the target PCF is selected through the NRF, and the NRF selects the target PCF according to information such as position, slice, DNAI and other service parameters and weight, load, coverage position area of each PCF. The target PCF migrates users accessed to the source PCF to the target PCF, After the migration of the user is completed, the target PCF notifies neighboring function entities, and notifies the source PCF of the migrated UE set, such that the source PCF locally deletes the related users, and thus migration of user control plane resources of the source PCF is implemented. This example includes steps 1100 to 1110.

In step 1100, the UE initiates a session establishment request. The session establishment is completed, and the PCF accesses to the user.

In step a, a maintenance staff needs to perform operations, such as maintenance upgrade, fault isolation, manual capacity expansion and shrinkage.

In step 1101, a network management platform sends a user control plane migration instruction to the source PCF, the source PCF locally selects the target PCF, and then the step 1104 is performed. Alternatively, steps 1102 and 1103 are performed and the target PCF is selected by the NRF.

In step 1102, the request for discovering the target PCF is sent to the NRF, where the request carries load information, slice information, position information, and other information related to the PCF selection.

In step 1103, the NRF selects the target PCF according to the information such as the position, the slice and other service parameters, and the weight, the load, and the coverage position area of each PCF, and sends the IP address of the target PCF to the source PCF through the response message.

In step 1104, the source PCF selects at least one UE set to migrate to the target PCF, and sends the user control plane migration request to the target PCF, which carries information such as identifier information of the user to be migrated and address information of the source PCF. The user to be migrated may be a UE set, and the address information of the source PCF may be the FQDN or URL identifier of this node.

In step 1105, the target PCF sends a request for acquiring user information to the SDSF, which carries information of the UE set to be migrated

In step 1106, the SDSF responds with a target PCF UE set information response, which carries user context information, a PDU session, Qos Flow, identifier information of the UE set to be migrated, and information related to PCF and users.

In step 1107, the target PCF notifies the SMF to update PCF node information of the UE set to be migrated, where the notification carries an IP address of the PCF corresponding to the UE set to be migrated, and the SMF updates address information of the PCF corresponding to the UE set to be migrated. If the address information of the PCF is represented by the IP address, the IP address is directly replaced with the IP address of the target PCF. If the address information of the PCF is represented by the FQDN or the URL, an IP address corresponding to the FQDN/URL of the PCF associated with the UE set to be migrated is updated to the IP address of the target PCF.

In step 1108, the target PCF notifies the AMF to update PCF node information of the UE set to be migrated, where the notification carries an IP address of the PCF corresponding to the UE set to be migrated, and the AMF updates address information of the PCF corresponding to the UE set to be migrated. If the address information of the PCF is represented by the IP address, the IP address is directly replaced with the IP address of the target PCF. If the address information of the PCF is represented by the FQDN or the URL, an IP address corresponding to the FQDN/URL of the PCF associated with the UE set to be migrated is updated to the IP address of the target PCF.

In step 1109, the target PCF notifies the source PCF of the completion of the UE set control plane migration, where the notification carries information of a UE set having been migrated.

In step 1110, the source PCF replies the user control plane migration response to the network management platform, and the user control plane migration is completed.

In step b, the source PCF locally deletes information of the UEs that has been migrated to the target PCF.

The embodiment of the present embodiment further provides an implementation device for control plane resource migration, which is applied to a first NF. The device is configured to implement the above-mentioned embodiments and preferred implementation modes. What has been described will not be repeated. As used below, the term "module" may be at least one of a combination of software and hardware capable of implementing predetermined functions. The apparatus described below in the embodiment may be implemented by software, but implementation by hardware or by a combination of software and hardware is also possible and conceived.

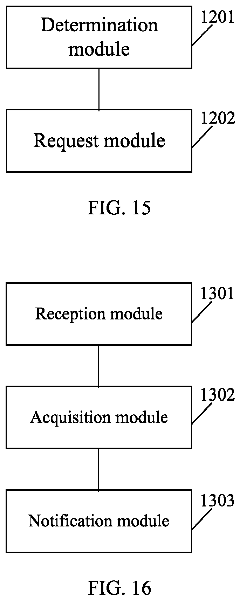

As shown in FIG. 15, the embodiment of the present application provides an implementation device for control plane resource migration, which is applied to a first NF and includes a determination module 1201, and a request module 1202.

The determination module 1201 is configured to determine to migrate user control plane resources, and select a second NF having a same type as the first NF.

The request module 1202 is configured to send a user control plane migration request to the second NF, wherein the user control plane migration request carries identifier information of a user to be migrated.

In an embodiment, the device further includes: a deletion module, which is configured to receive a user control plane migration completion notification sent by the second NF, where the user control plane migration completion notification carries identifier information of a migrated user, and delete information of the migrated user.

In an embodiment, the determination module 1201 is configured to: determine to migrate all or part of the user control plane resources according to load information of the first NF itself; or receive a migration instruction from a network manager and determine to migrate all or part of the user control plane resources.

In an embodiment, the determination module 1201 is configured to select the second NF through a network function repository function (NRF), or select the second NF locally.

In an embodiment, the determination module 1201 is configured to: send a request for discovering the second NF to the NRF, and receive a response of the NRF, where the response carries address information of the second NF.

In the embodiment of the present application, the first NF itself triggers the lossless migration of the user control plane resources, which can optimize the network resources in real time, improve the resource utilization of the network, ensure the reliability of the user service and improve the user experience.

An embodiment of the present application further provides a network function entity. The network function entity includes: a processor, a memory which is configured to store instructions executable by the processor; and a transmission apparatus which is configured to perform information transceiving communication according to control of the processor.

The processor is configured to execute the following operations: determining to migrate all or part of user control plane resources, selecting a second NF having the same type as the NF, and sending a user control plane migration request to the second NF, where the user control plane migration request carries identifier information of a user to be migrated.

In an embodiment, the processor is configured to execute the following operations: receiving a user control plane migration completion notification sent by the second NF, where the user control plane migration completion notification carries identifier information of a migrated user, and deleting information of the migrated user.

In an embodiment, the processor is further configured to execute the following operations: determining to migrate all or part of the user control plane resources according to load information of the NF itself; or receiving a migration instruction, and determining to migrate all or part of the user control plane resources.

In an embodiment, the processor is further configured to execute the following operations: selecting the second NF through a NRF, or selecting the second NF locally.

In an embodiment, the processor is further configured to execute the following operations: sending a request for discovering the second NF to the NRF, and receiving a response of the NRF, where the response carries address information of the second NF selected by the NRF.

In the embodiment of the present application, the NF itself triggers the lossless migration of the user control plane resources, which can optimize the network resources in real time, improve the resource utilization of the network, ensure the reliability of the user service and improve the user experience.

The embodiment of the present embodiment further provides an implementation device for control plane resource migration, which is applied to a second NF. The device is configured to implement the above-mentioned embodiments and preferred implementation modes. What has been described will not be repeated. As used below, the term "module" may be at least one of a combination of software and hardware capable of implementing predetermined functions. The apparatus described below in the embodiment may be implemented by software, but implementation by hardware or by a combination of software and hardware is also possible and conceived.

As shown in FIG. 16, the embodiment of the present application provides an implementation device for control plane resource migration, which is applied to a second NF and includes a reception module 1301, an acquisition 1302 and a notification module 1303.

The reception module 1301 is configured to receive a user control plane migration request sent by a first NF, where the user control plane migration request carries identifier information of a user to be migrated.

The acquisition module 1302 is configured to acquire control plane resource information of the user to be migrated according to the identifier information of the user to be migrated.

The notification module 1303 is configured to notify a neighboring NF of the first NF to update address information of the first NF associated with the user to be migrated in the neighboring NF to address information of the second NF.

In an embodiment, the notification module 1303 is further configured to send a user control plane migration completion notification to the first NF, where the user control plane migration completion notification carries identifier information of a migrated user.

In an embodiment, the acquisition module 1302 is configured to: send a user information acquisition request to the structured data storage network (SDSF), where the user information acquisition request carries the identifier information of the user to be migrated; and receive a user information acquisition response from the SDSF, where the user information acquisition response carries control plane resource information of the user to be migrated.

In the embodiment of the present application, the user control plane resources in the first NF are migrated to the second NF through the second NF, which can optimize the network resources in real time, improve the resource utilization of the network, at the same time, ensure the reliability of the user service and improve the user experience.

An embodiment of the present application further provides a network function entity. The network function entity includes: a processor, a memory which is configured to store instructions executable by the processor; and a transmission apparatus which is configured to perform information transceiving communication according to control of the processor.

The processor is configured to execute the following operations: receiving a user control plane migration request sent by the first NF, where the user control plane migration request carries identifier information of a user to be migrated; acquiring control plane resource information of the user to be migrated according to the identifier information of the user to be migrated; and notifying a neighboring NF of the first NF to update address information of the first NF associated with the user to be migrated in the neighboring NF to address information of the NF .

In an embodiment, the processor is further configured to execute the following operations: notifying the neighboring NF of the first NF to send a user control plane migration completion notification to the first NF after updating the address information of the first NF associated with the user to be migrated in the neighboring NF to the address information of the NF, where the user control plane migration completion notification carries identifier information of a migrated user.

In an embodiment, the processor is further configured to execute the following operations: sending a user information acquisition request to the structured data storage network (SDSF), where the user information acquisition request carries the identifier information of the user to be migrated; and receiving a user information acquisition response from the SDSF, where the user information acquisition response carries control plane resource information of the user to be migrated.

In an embodiment, the processor is further configured to execute the following operations: notifying the neighboring NF of the first NF to update an IP address of the first NF associated with the user to be migrated to the IP address of the NF, or notifying the neighboring NF of the first NF to update an IP address corresponding to a FQDN or a URL of the first NF associated with the user to be migrated to the IP address of the NF .

In the embodiment of the present application, through migrating user control plane resources in the first NF, the network resources is optimized in real time, the resource utilization of the network is improved, the reliability of the user service is ensured and the user experience is improved.

The embodiment of the present application further provides a computer-readable storage medium configured to store computer-executable instructions for executing the implementation method for control plane resource migration as shown in FIG. 5.

The embodiment of the present application further provides a computer-readable storage medium configured to store computer-executable instructions for executing the implementation method for control plane resource migration as shown in FIG. 6.

In this embodiment, the storage medium may include, but is not limited to, a U disk, a read-only memory (ROM), a random access memory (RAM), a mobile hard disk, a magnetic disk, an optical disk or another medium capable of storing program codes.

For example, the above steps may be implemented by program codes executable by the computing apparatuses, so that they may be stored in a storage apparatus to be executed by the computing apparatuses. In some circumstances, the illustrated or described steps may be executed in sequences different from those described herein, or they may be separately made into integrated circuit modules, or multiple modules or steps therein may be made into a single integrated circuit module for implementation. In this way, the embodiments of the present application are not limited to any particular combination of hardware and software.

## Claims

1. An implementation method for control plane resource migration, comprising:
determining (201), by a first network function entity, NF, to migrate user control plane resources according to load information of the first NF;
selecting, by the first NF, a second NF having a same type as the first NF; and
sending (202), by the first NF, a user control plane migration request to the second NF, wherein the user control plane migration request carries identifier information of a user to be migrated;
wherein selecting, by the first NF, the second NF having the same type as the first NF comprises:
sending, by the first NF, a request for discovering the second NF to a network function repository function, NRF, wherein the request for discovering the second NF carries the load information; and
receiving, by the first NF, a response of the NRF, wherein the response carries address information of the second NF, wherein the second NF is selected by the NRF according to the load information.

2. The method of claim 1, after sending, by the first NF, the user control plane migration request to the second NF, further comprising:
receiving, by the first NF, a user control plane migration completion notification sent by the second NF, wherein the user control plane migration completion notification carries identifier information of a migrated user; and
deleting, by the first NF, information of the migrated user.

3. The method of claim 1 or 2, wherein identifier information of the user to be migrated is identifier information of a user set, the identifier information of the user set is represented by one of: a group identifier, an international mobile subscriber identification, IMSI, number segment, or a session management function entity, SMF, identifier.

4. The method of any one of claims 1 to 3, wherein the user control plane migration request further carries address information of the first NF, and the address information of the first NF is represented by one of: a fully qualified domain name, FQDN, a uniform resource locator, URL, or Internet Protocol, IP address.

5. The method of any one of claims 1 to 4, wherein the first NF and the second NF are one of: a session management function, SMF, an access management function, AMF, a unified data management, UDM, or a policy control function, PCF.

6. The method of any one of claims 1 to 5, further comprising:
receiving (301), by the second NF, the user control plane migration request sent by the first NF;
acquiring (302), by the second NF, control plane resource information of the user to be migrated according to the identifier information of the user to be migrated; and
notifying (303), by the second NF, a neighboring NF of the first NF to update, in the neighboring NF, address information of the first NF associated with the user to be migrated to address information of the second NF

7. The method of claim 6, after notifying (303), by the second NF, the neighboring NF of the first NF to update the address information of the first NF associated with the user to be migrated in the neighboring NF to the address information of the second NF, further comprising:
sending, by the second NF, the user control plane migration completion notification to the first NF.

8. The method of claim 6, wherein acquiring (302), by the second NF, the control plane resource information of the user to be migrated according to the identifier information of the user to be migrated comprises:
sending, by the second NF, a user information acquisition request to a structured data storage network function, SDSF, wherein the user information acquisition request carries the identifier information of the user to be migrated; and
receiving, by the second NF, a user information acquisition response from the SDSF, wherein the user information acquisition response carries the control plane resource information of the user to be migrated.

9. The method of claim 6 or 8, wherein the control plane resource information of the user to be migrated comprises one of:
user context information;
the user context information and protocol data unit, PDU, session information; or
the user context information, the PDU session information and quality of service and flow control information.

10. The method of claim 6, wherein notifying (303), by the second NF, the neighboring NF of the first NF to update the address information of the first NF associated with the user to be migrated in the neighboring NF to the address information of the second NF comprises:
notifying, by the second NF, the neighboring NF of the first NF to update an Internet Protocol, IP, address of the first NF associated with the user to be migrated in the neighboring NF to an IP address of the second NF, or
notifying, by the second NF, the neighboring NF of the first NF to update an IP address corresponding to a Uniform Resource Locator, URL, or a Fully Qualified Domain Name, FQDN, associated with the user in the neighboring NF to be migrated to an IP address of the second NF.

11. A first network function entity, NF, comprising:
a first processor;
a first memory, which is configured to store instructions executable by the first processor;
a first transmission apparatus, which is configured to perform information transceiving communication according to control of the first processor;
wherein the first processor is configured to execute the implementation method for control plane resource migration of any one of claims 1 to 5.

12. A system comprising the first NF of claim 11 and a second NF, wherein the second NF comprises:
a second processor;
a second memory, which is configured to store instructions executable by the second processor;
a second transmission apparatus, which is configured to perform information transceiving communication according to control of the second processor;
wherein the second processor is configured to execute the implementation method for control plane resource migration of any one of claims 6 to 10.

13. A computer-readable storage medium storing first computer-executable instructions, which, when executed by a first network function entity, NF, cause the first NF to execute the implementation method for control plane resource migration of any one of claims 1 to 5.

14. The computer-readable storage medium of claim 13, further storing second computer-executable instructions, which, when executed by a second network function entity, NF, cause the second NF to execute the implementation method for control plane resource migration of any one of claims 6 to 10.

## Patentansprüche

1. Implementierungsverfahren für eine Migration von Steuerebenen-Ressourcen, welches umfasst:
ein Bestimmen (201), durch eine erste Netzwerkfunktionseinheit, NF, um Benutzer-Steuerebenen-Ressourcen gemäß Lastinformationen der ersten NF zu migrieren,
ein Auswählen, durch die erste NF, einer zweiten NF, die den gleichen Typ wie die erste NF hat, und
ein Senden (202) einer Migrationsanforderung einer Benutzersteuerebene durch die erste NF an die zweite NF, wobei die Migrationsanforderung der Benutzersteuerebene Identifizierungsinformationen eines zu migrierenden Benutzers trägt,
wobei das Auswählen, durch den ersten NF, des zweiten NF, der den gleichen Typ wie der erste NF hat, umfasst
ein Senden, durch die erste NF, einer Anforderung zum Erkennen der zweiten NF an eine Netzwerkfunktions-Repository-Funktion, NRF, wobei die Anforderung zum Erkennen der zweiten NF die Lastinformation trägt, und
ein Empfangen einer Antwort der NRF durch die erste NF, wobei die Antwort Adressinformationen der zweiten NF trägt, wobei die zweite NF durch die NRF gemäß den Lastinformationen ausgewählt wird.

2. Verfahren nach Anspruch 1, das nach dem Senden der Migrationsanforderung der Benutzersteuerebene durch die erste NF an die zweite NF ferner umfasst:
ein Empfangen einer von der zweiten NF gesendeten Benachrichtigung über den Abschluss der Migration der Benutzersteuerebene durch die erste NF, wobei die Benachrichtigung über den Abschluss der Migration der Benutzersteuerebene Identifizierungsinformationen eines migrierten Benutzers enthält, und
ein Löschen von Informationen über den migrierten Benutzer durch die erste NF.

3. Verfahren nach Anspruch 1 oder 2, wobei die Identifizierungsinformation des zu migrierenden Benutzers die Identifizierungsinformation eines Benutzersatzes ist, wobei die Identifizierungsinformation des Benutzersatzes durch eine Gruppenkennung, eine internationale Mobilteilnehmeridentifikation, IMSI, ein Nummernsegment, oder eine Sitzungsverwaltungsfunktionsentitätskennung, SMF, dargestellt wird.

4. Verfahren nach einem der Ansprüche 1 bis 3, wobei die Migrationsanforderung der Benutzersteuerebene ferner Adressinformationen der ersten NF enthält und die Adressinformationen der ersten NF durch einen von einem vollständig qualifizierten Domänennamen, FQDN, einem einheitlichen Ressourcenlokalisierer, URL, oder einer Internetprotokoll-Adresse, IP-Adresse, dargestellt werden.

5. Verfahren nach einem der Ansprüche 1 bis 4, wobei die erste NF und die zweite NF eine der Funktionen von einer Sitzungsverwaltungsfunktion (Session Management Function), SMF, einer Zugriffsverwaltungsfunktion (Access Management Function), AMF, einer einheitlichen Datenverwaltung (Unified Data Management), UDM, oder eine Richtlinienkontrollfunktion (Policy Control Function), PCF, ist.

6. Verfahren nach einem der Ansprüche 1 bis 5, welches ferner umfasst:
ein Empfangen (301) der von der ersten NF gesendeten Migrationsanforderung der Benutzersteuerebene durch die zweite NF,
ein Erfassen (302), durch die zweite NF, von Steuerebenen-Ressourceninformationen des zu migrierenden Benutzers gemäß den Identifizierungsinformationen des zu migrierenden Benutzers, und
ein Benachrichtigen (303) einer benachbarten NF der ersten NF durch die zweite NF, um in der benachbarten NF Adressinformationen der ersten NF, die mit dem zu migrierenden Benutzer verbunden sind, auf Adressinformationen der zweiten NF zu aktualisieren

7. Verfahren nach Anspruch 6, welches nachdem die zweite NF die benachbarte NF der ersten NF benachrichtigt hat (303), die Adressinformationen der ersten NF, die dem zu migrierenden Benutzer zugeordnet sind, in der benachbarten NF auf die Adressinformationen der zweiten NF zu aktualisieren, ferner umfasst:
ein Senden der Mitteilung über den Abschluss der Migration der Benutzersteuerebene durch die zweite NF an die erste NF.

8. Verfahren nach Anspruch 6, wobei das Erfassen (302) der Steuerebenen-Ressourceninformation des zu migrierenden Benutzers durch die zweite NF gemäß der Identifizierungsinformation des zu migrierenden Benutzers umfasst:
ein Senden, durch die zweite NF, einer Anforderung zur Benutzerinformationserfassung an eine strukturierte Datenspeichernetzwerkfunktion, SDSF, wobei die Anforderung zur Benutzerinformationserfassung die Identifizierungsinformation des zu migrierenden Benutzers trägt, und
ein Empfangen einer Antwort zur Benutzerinformationserfassung von der SDSF durch die zweite NF, wobei die Benutzerinformationserfassungsantwort die Steuerebenen-Ressourceninformation des zu migrierenden Benutzers trägt.

9. Verfahren nach Anspruch 6 oder 8, wobei die Steuerebenen-Ressourceninformationen des zu migrierenden Benutzers eines der Elemente aufweisen:
Benutzerkontextinformationen,
die Benutzerkontextinformation und die Protokolldateneinheit-Sitzungsinformation, PDU-Sitzungsinformation, oder
die Benutzerkontextinformationen, die PDU-Sitzungsinformationen und Dienstgüte- und Flusssteuerungsinformationen.

10. Verfahren nach Anspruch 6, wobei das Benachrichtigen (303) der benachbarten NF der ersten NF durch die zweite NF zum Aktualisieren der Adressinformationen der ersten NF, die mit dem zu migrierenden Benutzer in der benachbarten NF verbunden sind, auf die Adressinformationen der zweiten NF umfasst
ein Benachrichtigen des benachbarten NF des ersten NF durch den zweiten NF, um eine Internetprotokoll-Adresse, IP-Adresse, des ersten NF, die mit dem zu migrierenden Benutzer im benachbarten NF assoziiert ist, auf eine IP-Adresse des zweiten NF zu aktualisieren, oder
ein Benachrichtigen des benachbarten NF des ersten NF durch den zweiten NF, um eine IP-Adresse, die einem einheitlichen Ressourcenlokalisierer (Uniform Resource Locator), URL, oder einem vollständig qualifiziertem Domänennamen (Fully Qualified Domain Name), FQDN, entspricht, der mit dem zu migrierenden Benutzer im benachbarten NF verbunden ist, auf eine IP-Adresse des zweiten NF zu aktualisieren.

11. Erste Netzwerkfunktionseinheit, NF, welche aufweist:
einen ersten Prozessor,
einen ersten Speicher, der ausgestaltet ist, um von dem ersten Prozessor ausführbare Befehle zu speichern,
eine erste Übertragungsvorrichtung, die ausgestaltet ist, um eine Informationsübertragungskommunikation gemäß der Steuerung des ersten Prozessors durchzuführen,
wobei der erste Prozessor ausgestaltet ist, um das Implementierungsverfahren für die Migration von Steuerebenen-Ressourcen nach einem der Ansprüche 1 bis 5 auszuführen.

12. System, welches die erste NF nach Anspruch 11 und eine zweite NF aufweist, wobei die zweite NF aufweist:
einen zweiten Prozessor,
einen zweiten Speicher, der zum Speichern von durch den zweiten Prozessor ausführbaren Befehlen ausgestaltet ist,
eine zweite Übertragungsvorrichtung, die ausgestaltet ist, um eine Informationsübertragungskommunikation entsprechend der Steuerung durch den zweiten Prozessor durchzuführen,
wobei der zweite Prozessor ausgestaltet ist, um das Implementierungsverfahren für die Migration von Steuerebenenressourcen nach einem der Ansprüche 6 bis 10 auszuführen.

13. Computerlesbares Speichermedium, das erste computerausführbare Befehle speichert, die, wenn sie von einer ersten Netzwerkfunktionseinheit, NF, ausgeführt werden, die erste NF veranlassen, das Implementierungsverfahren für die Migration von Steuerebenen-Ressourcen nach einem der Ansprüche 1 bis 5 auszuführen.

14. Computerlesbares Speichermedium nach Anspruch 13, das ferner zweite computerausführbare Befehle speichert, die, wenn sie von einer zweiten Netzwerkfunktionseinheit, NF, ausgeführt werden, die zweite NF veranlassen, das Implementierungsverfahren für die Migration von Steuerebenen-Ressourcen nach einem der Ansprüche 6 bis 10 auszuführen.

## Revendications

1. Procédé de mise en oeuvre pour la migration de ressources de plan de commande, comprenant :
la détermination (201), par une première entité de fonction réseau, NF, de la migration de ressources de plan de commande d'utilisateur en fonction d'informations de charge de la première NF ;
la sélection, par la première NF, d'une deuxième NF de même type que la première NF ; et
l'envoi (202), par la première NF, d'une requête de migration de plan de commande d'utilisateur à la deuxième NF, dans lequel la requête de migration de plan de commande d'utilisateur transporte des informations d'identification d'un utilisateur devant faire l'objet d'une migration ;
dans lequel la sélection, par la première NF, de la deuxième NF de même type que la première NF comprend :
l'envoi, par la première NF, d'une requête de découverte de la deuxième NF à une fonction de référentiel de fonction réseau, NRF, dans lequel la requête de découverte de la deuxième NF transporte les informations de charge ; et
la réception, par la première NF, d'une réponse de la NRF, dans lequel la réponse transporte des informations d'adresse de la deuxième NF, dans lequel la deuxième NF est sélectionnée par la NRF en fonction des informations de charge.

2. Procédé selon la revendication 1, comprenant en outre, après l'envoi, par la première NF, de la requête de migration de plan de commande d'utilisateur à la deuxième NF :
la réception, par la première NF, d'une notification d'achèvement de migration de plan de commande d'utilisateur envoyée par la deuxième NF, dans lequel la notification d'achèvement de migration de plan de commande d'utilisateur transporte des informations d'identification d'un utilisateur migré ; et
la suppression, par la première NF, d'informations de l'utilisateur migré.

3. Procédé selon la revendication 1 ou 2, dans lequel les informations d'identification de l'utilisateur devant faire l'objet d'une migration sont des informations d'identification d'un ensemble d'utilisateurs, les informations d'identification de l'ensemble d'utilisateurs étant représentées par l'un des éléments suivants : un identifiant de groupe, un segment de numéro d'identification internationale d'abonnement mobile, IMSI, ou un identifiant d'entité de fonction de gestion de session, SMF.

4. Procédé selon l'une quelconque des revendications 1 à 3, dans lequel la requête de migration de plan de commande d'utilisateur transporte en outre des informations d'adresse de la première NF, et les informations d'adresse de la première NF sont représentées par l'un des éléments suivants : un nom de domaine complet, FQDN, un localisateur uniforme de ressource, URL, ou une adresse de protocole Internet, IP.

5. Procédé selon l'une quelconque des revendications 1 à 4, dans lequel la première NF et la deuxième NF sont l'une des fonctions suivantes : une fonction de gestion de session, SMF, une fonction de gestion d'accès, AMF, une fonction de gestion unifiée des données, UDM, ou une fonction de contrôle de politique, PCF.

6. Procédé selon l'une quelconque des revendications 1 à 5, comprenant en outre :
la réception (301), par la deuxième NF, de la requête de migration de plan de commande d'utilisateur envoyée par la première NF ;
l'acquisition (302), par la deuxième NF, d'informations de ressources de plan de commande de l'utilisateur devant faire l'objet d'une migration en fonction des informations d'identification de l'utilisateur devant faire l'objet d'une migration ; et
la notification (303), par la deuxième NF, à une NF voisine de la première NF de mise à jour, dans la NF voisine, d'informations d'adresse de la première NF associées à l'utilisateur devant faire l'objet d'une migration vers des informations d'adresse de la deuxième NF.

7. Procédé selon la revendication 6, comprenant en outre après la notification (303), par la deuxième NF, à la NF voisine de la première NF de la mise à jour des informations d'adresse de la première NF associées à l'utilisateur devant faire l'objet d'une migration dans la NF voisine vers les informations d'adresse de la deuxième NF :
l'envoi, par la deuxième NF, de la notification d'achèvement de migration de plan de commande d'utilisateur à la première NF.

8. Procédé selon la revendication 6, dans lequel l'acquisition (302), par la deuxième NF, des informations de ressources de plan de commande de l'utilisateur devant faire l'objet d'une migration en fonction des informations d'identification de l'utilisateur devant faire l'objet d'une migration comprend :
l'envoi, par la deuxième NF, d'une requête d'acquisition d'informations d'utilisateur à une fonction réseau de stockage de données structurées, SDSF, dans lequel la requête d'acquisition d'informations d'utilisateur transporte les informations d'identification de l'utilisateur devant faire l'objet d'une migration ; et
la réception, par la deuxième NF, d'une réponse d'acquisition d'informations d'utilisateur de la part de la SDSF, dans lequel la réponse d'acquisition d'informations d'utilisateur transporte les informations de ressources de plan de commande de l'utilisateur devant faire l'objet d'une migration.

9. Procédé selon la revendication 6 ou 8, dans lequel les informations de ressources de plan de commande de l'utilisateur devant faire l'objet d'une migration comprennent l'un des éléments suivants :
des informations de contexte utilisateur;
les informations de contexte utilisateur et des informations de session d'unité de données de protocole, PDU ; ou
les informations de contexte utilisateur, les informations de session PDU et des informations de qualité de service et de contrôle du flux.

10. Procédé selon la revendication 6, dans lequel la notification (303), par la deuxième NF, à la NF voisine de la première NF de la mise à jour des informations d'adresse de la première NF associées à l'utilisateur devant faire l'objet d'une migration dans la NF voisine vers les informations d'adresse de la deuxième NF comprend :
la notification, par la deuxième NF, à la NF voisine de la première NF de mise à jour d'une adresse de protocole Internet, IP, de la première NF associée à l'utilisateur devant faire l'objet d'une migration dans la NF voisine vers une adresse IP de la deuxième NF, ou
la notification, par la deuxième NF, à la NF voisine de la première NF de mise à jour d'une adresse IP correspondant à un localisateur uniforme de ressource, URL, ou à un nom de domaine complet, FQDN, associée à l'utilisateur dans la NF voisine devant faire l'objet d'une migration vers une adresse IP de la deuxième NF.

11. Première entité de fonction réseau, NF, comprenant :
un premier processeur ;
une première mémoire, qui est configurée pour stocker des instructions exécutables par le premier processeur;
un premier appareil de transmission, qui est configuré pour effectuer une communication d'émission-réception d'informations en fonction de la commande du premier processeur ;
dans lequel le premier processeur est configuré pour exécuter le procédé de mise en oeuvre pour la migration de ressources de plan de commande selon l'une quelconque des revendications 1 à 5.

12. Système comprenant la première NF selon la revendication 11 et une deuxième NF, dans lequel la deuxième NF comprend :
un deuxième processeur;
une deuxième mémoire, qui est configurée pour stocker des instructions exécutables par le deuxième processeur ;
un deuxième appareil de transmission, qui est configuré pour effectuer une communication d'émission-réception d'informations en fonction de la commande du deuxième processeur ;
dans lequel le deuxième processeur est configuré pour exécuter le procédé de mise en oeuvre pour la migration de ressources de plan de commande selon l'une quelconque des revendications 6 à 10.

13. Support de stockage lisible par ordinateur stockant les premières instructions exécutables par ordinateur qui, lorsqu'elles sont exécutées par une première entité de fonction réseau, NF, amènent la première NF à exécuter le procédé de mise en oeuvre pour la migration de ressources de plan de commande selon l'une quelconque des revendications 1 à 5.

14. Support de stockage lisible par ordinateur selon la revendication 13, stockant en outre des deuxièmes instructions exécutables par ordinateur qui, lorsqu'elles sont exécutées par une deuxième entité de fonction réseau, NF, amènent la deuxième NF à exécuter le procédé de mise en oeuvre pour la migration de ressources de plan de commande selon l'une quelconque des revendications 6 à 10.
